# EUROPÄISCHE PATENTANMELDUNG

(11) **EP 1 228 802 A1**
(43) Veröffentlichungstag der Anmeldung: **07.08.2002**
(21) Anmeldenummer: 02001240.7
(22) Anmeldetag: 17.01.2002
(51) Int. Cl.: B01J 19/24, B01J 19/00, B01J 35/04, B01J 35/06, F28D 9/04, F01N 3/20, F01N 3/28, C01B 3/32

(54) **Reaktor für Brennstoffzellensystem**

(30) Priorität: 02.02.2001 DE 10104601
(71) Anmelder: Ballard Power Systems AG, 73230 Kirchheim / Teck-Nabern (DE)
(72) Erfinder: Boneberg, Stefan, 72660 Beuren (DE); Stark, Thomas, 73230 Kirchheim/Teck (DE)
(74) Vertreter: Kaufmann, Ursula Josefine, Dr.rer.nat. Dipl.-Phys.

(57) **Zusammenfassung**

Die Erfindung betrifft einen Reaktor mit einem katalytisch beschichteten metallischen Katalysatorträger, wobei der Katalysatorträger als Teil eines elektrischen Stromkreises ausgebildet und mit einem katalytisch umzusetzenden Medium beaufschlagt ist, wobei der Katalysatorträger zumindest bereichsweise im Strömungsweg eines vom Katalysator umzusetzenden Mediums angeordnet und von diesem Medium durchströmbar ist.

## Beschreibung

Die Erfindung betrifft einen Reaktor für ein Brennstoffzellensystem gemäß dem Oberbegriff des unabhängigen Anspruchs.

Während der Startphase eines Fahrzeugs, welches mit Energie aus einem Brennstoffzellensystem versorgt oder angetrieben wird, entstehen Emissionen, die nicht umgesetzt werden und so in das Abgas gelangen. So wird in Reformersystemen, bei denen Wasserstoff zum Betreiben des Brennstoffzellenmoduls erst aus einem Brennmittel gewonnen werden muß, eine relativ hohe Temperatur benötigt, damit die Katalysatoren zur Reformierung und Kohlenmonoxidentfernung aus dem Reformat mit ausreichender Effizienz arbeiten können. Solange das Brennstoffzellensystem noch nicht auf Betriebstemperatur ist, um etwa eine vollständige Entfernung des Kohlenmonoxids aus dem Reformat zu gewährleisten, entstehen Emissionen. In der Startphase ist daher auch der Wirkungsgrad des Brennstoffzellensystems niedrig. Um die Komponenten möglichst schnell auf Betriebstemperaturen zu bringen, werden Kaltstartkomponenten vorgeschlagen, die etwa mittels zusätzlicher Verbrennung Wärme erzeugen und dergleichen.

Aus der DE 196 40 577 A1 ist ein direkt bestromter Metallträger für einen Katalysator bekannt, der in der Startphase elektrisch beheizt wird, so daß der Katalysator schneller auf Betriebstemperatur kommt. Dabei wird ein katalytisch beschichtetes Metallblech von elektrischem Strom durchflossen und durch ohmsche Verluste erhitzt.

Aus der gattungsgemäßen DE 197 53 206 C1 ist ein elektrisch beheizbarer Katalysator bekannt, bei dem eine Fasermatte in der Art einer Filterkerze aufgewickelt ist und elektrische Heizdrähte außerhalb des Fasermaterials, an dem eine katalytische Umsetzung eines Mediums stattfindet, angeordnet sind. Bevorzugt wird die Heizeinrichtung am äußeren Umfang der aufgewickelten Fasermatte angebracht. Das Medium strömt im wesentlichen in axialer Richtung der Wicklung durch die Anordnung. Die Heizdrähte erwärmen den Katalysator homogen und sorgen für eine gleichmäßige Umsetzung des Mediums in der Anordnung. Die Heizeinrichtung bewirkt, daß die Temperatur bei einem kontinuierlichen Betrieb des Katalysators möglichst konstant bleibt und der Katalysator homogen beheizt wird, so daß das Medium dort stets optimal umgesetzt wird.

Der Erfindung liegt die Aufgabe zugrunde, einen Reaktor anzugeben, der eine möglichst kurze Kaltstartphase aufweist und der besonders für ein Brennstoffzellensystem geeignet ist.

Diese Aufgabe wird bei einem Reaktor mit den Merkmalen des Anspruchs 1 gelöst.

Der Vorteil der erfindungsgemäßen Lösung besteht darin, daß der Reaktor einerseits schnell aufgeheizt werden kann, andererseits zuverlässig verhindert, daß sich lokal überhitzte Stellen ausbilden, die den Betrieb des Reaktors oder dessen Lebensdauer verschlechtern.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung gehen aus den weiteren Ansprüchen und der Beschreibung hervor.

Die Erfindung ist nachstehend anhand einer Zeichnung näher beschrieben, wobei die Figuren zeigen:
- Fig. 1: eine seitliche Ansicht eines bevorzugten Reaktors mit Katalysatorträger und Isoliermaterial in der Art einer Filterkerze,
- Fig. 2: eine Draufsicht auf einen bevorzugten Reaktor in Art einer Filterkerze,
- Fig. 3: eine Draufsicht auf eine bevorzugte Ausgestaltung des Reaktors und
- Fig. 4: eine Draufsicht auf einer günstigen Ausgestaltung eines bevorzugten Reaktors.

Die Erfindung ist besonders für Reaktoren in Brennstoffzellensystemen geeignet, welche in mobilen Systemen, insbesondere in Fahrzeugen, betrieben werden. Der Reaktor kann sehr kompakt ausgeführt werden.

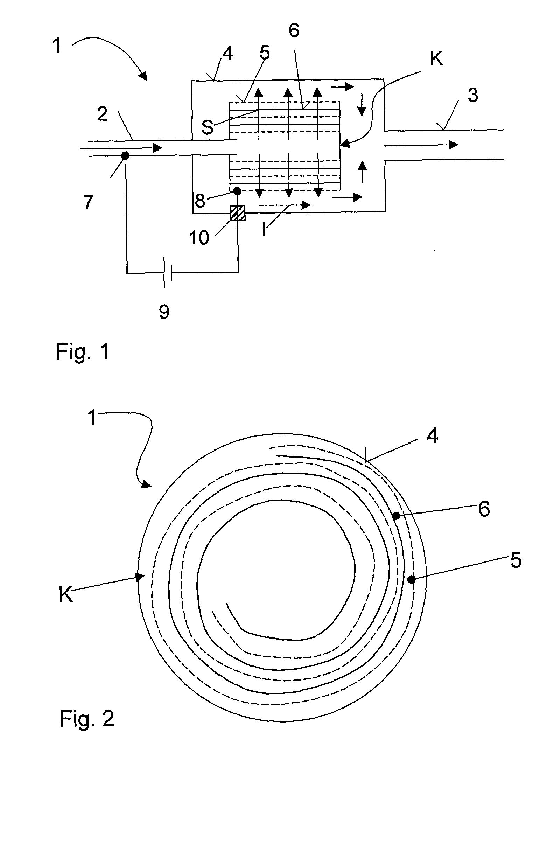

In Fig. 1 ist ein bevorzugter Reaktor 1 dargestellt. Der Reaktor weist ein Gehäuse 4 auf mit einer Medienzuführung 2 und einer Medienabführung 3. Die Medienströmung ist durch Pfeile gekennzeichnet. Im Innern des Reaktors 1 ist eine Katalysatoreinheit K angeordnet, die einen elektrisch leitfähigen, im wesentlichen flächigen Katalysatorträger 5 aufweist, der durch eine gestrichelte Linie angedeutet ist. Die Katalysatoreinheit K ist in diesem Beispiel nach Art einer Filterkerze ausgeführt, d.h. der Katalysatorträger 5 ist in mehreren Lagen um die als Rohr ausgebildete Medienzuführung 2 gewickelt. Die einzelnen Lagen des Katalysatorträgers 5 sind dabei durch ein elektrisches Isolationsmaterial 6 voneinander getrennt. Dabei sind sowohl der Katalysatorträger 5 als auch das Isoliermaterial 6 porös und werden vom Medium durchströmt, wobei die Medienströmung im wesentlichen senkrecht durch den flächigen Katalysatorträger 5 und das Isoliermaterial 6 durchtritt. Die Hauptströmungsrichtung S in der bevorzugten Ausbildung der Katalysatoreinheit K als zylinderförmige Filterkerze mit mehreren Lagen metallischem Katalysatorträger 5 und dazwischen angeordneten Lagen Isoliermaterial 6 ist demnach im wesentlichen radial.

Das in den Reaktor 1 geführte Medium strömt axial, z.B. im Zentrum der Filterkerze ein und strömt radial durch den Katalysatorträger 5 und das Isoliermaterial 6, wird dort umgesetzt, im Bereich zwischen Gehäuse 4 und äußerer Begrenzung der Filterkerze gesammelt und über die Medienabführung 3 aus dem Reaktor 1 abgeleitet. Der Katalysatorträger 5 ist so angeordnet, dass er zumindest bereichsweise senkrecht im Strömungsweg des Mediums steht, wobei der Hauptströmungsweg des Mediums senkrecht durch den Katalysatorträger 5 und dort auch hauptsächlich die katalytische Umsetzung des Mediums erfolgt. Die Umsetzung erfolgt dabei im wesentlichen innerhalb des Katalysatorträgers in dessen Poren und/oder an dessen Oberfläche. Das Medium strömt nicht an dessen flächiger Oberfläche vorbei, sondern durchsetzt den Körper des Katalysatorträgers 5.

Die Katalysatoreinheit K ist dann vorzugsweise praktisch nur radial vom Medium durchströmbar. In axialer Richtung ist die Katalysatoreinheit K gegenüber dem Gehäuse im wesentlichen abgeschlossen.

Ein erster elektrischer Kontakt 7 ist an einer ersten Kontaktstelle des Reaktors 1 und ein zweiter elektrischer Kontakt 8 an einer zweiten Kontaktstelle des Reaktors 1 so angeordnet, daß der elektrische Stromfluß I im wesentlichen senkrecht zur Strömungsrichtung S des Mediums durch den Katalysatorträger 5 erfolgt.

Dadurch wird der Katalysatorträger 5 direkt beheizt und sehr schnell auf seine Reaktionstemperatur oder eine andere gewünschte Temperatur gebracht. Da das katalytisch aktive Material vorzugsweise direkt auf dem metallischen Katalysatorträger 5, eventuell auch mittels einer Haftvermittlerschicht, ist die thermische Ankopplung sehr gut.

Vorzugsweise ist der erste Kontakt 7 an der Medienzuführung angeordnet und der zweite Kontakt 8 an der äußeren Begrenzung der Filterkerze bzw. des Katalysatorträgers 6, so dass insgesamt ein elektrischer Strom I durch den gesamten elektrisch leitfähigen Katalysatorträger 5 in seiner Längserstreckung fließt. Der Katalysatorträger 5 dient als Heizwiderstand.

Der Vorteil ist, dass der elektrisch leitfähige Katalysatorträger durch einen elektrischen Strom aufgeheizt werden kann, wodurch eine höhere Betriebstemperatur sehr schnell erreichbar ist. Durch die vom Medium durchströmbare elektrische Isolierung wird gewährleitstet, dass der elektrische Strom entlang der gesamten Längserstreckung des Katalysatorträgers fließt und diesen gleichmäßig aufheizt.

Vorzugsweise sind Katalysatorträger 5 und Isoliermaterial 6 als Bänder oder Matten ausgebildet. Damit kann eine Filterkerze besonders einfach gewickelt werden. Vorzugsweise sind Katalysatorträger 5 und Isoliermaterial 6 gleich breit, wobei die Breite im wesentlichen der axialen Länge der Filterkerze entspricht.

In Fig. 2 ist ein Querschnitt durch einen bevorzugten derartigen Reaktor 1 in Form einer Filterkerze entsprechend Fig. 1 dargestellt. Ist die Katalysatoreinheit K des Reaktors wie eine bevorzugte Filterkerze aufgebaut, so kann im einfachsten Fall eine Lage elektrisches Isolationsmaterial 6 auf eine in etwa gleich große Lage elektrisch leitfähiger Katalysatorträger 5 gelegt und die Doppellage dann aufgewickelt werden. Es können dabei auch mehrere Lagen des Isoliermaterials 6 zwischen zwei Lagen des Katalysatorträgers 5 angeordnet sein.

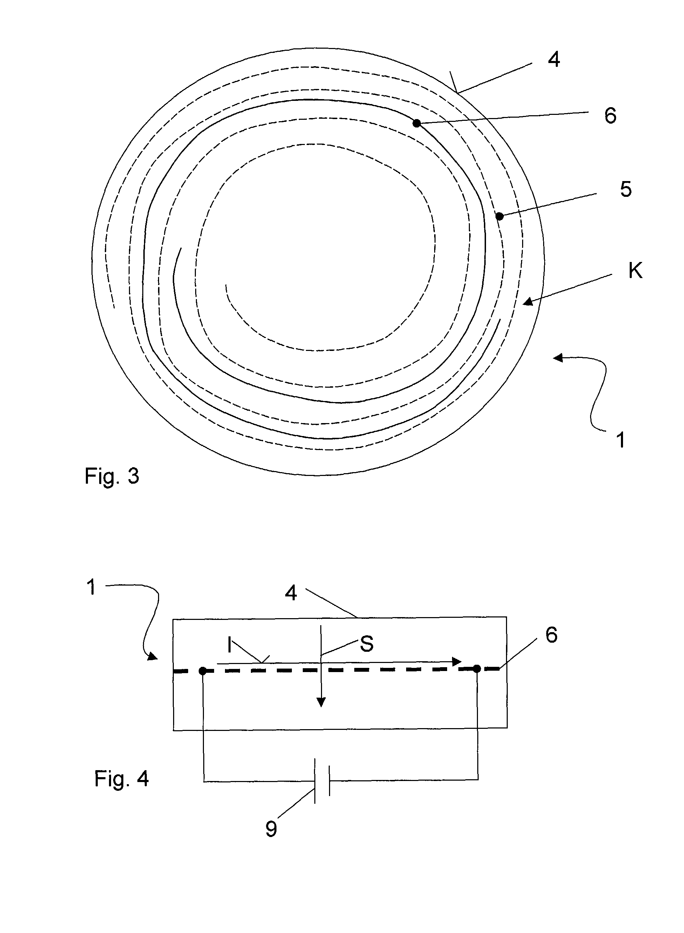

In Fig. 3 ist eine bevorzugte Weiterbildung der Erfindung dargestellt. Die Katalysatoreinheit ist wiederum nach Art einer Filterkerze aufgebaut. Nunmehr ist die elektrisch isolierende Lage 6 jedoch nur an ausgewählten Bereichen der Katalysatoreinheit angeordnet, hier etwa, radial betrachtet, in der Mitte der Filterkerzenanordnung mit einer in Umfangsrichtung über mehrere Wicklungen reichenden elektrischen Isolierung 6. Dadurch wird erreicht, dass der elektrische Widerstand der Katalysatoreinheit K am Anfang und am Ende des Katalysatorträgers 5 gering und in der Mitte hoch ist. Entsprechend sind die ohmschen Verluste in der Mitte hoch und damit auch die Temperaturentwicklung bei elektrischem Stromfluss. Dadurch kann vorteilhaft eine Temperaturverteilung im Reaktor vorgegeben werden, die der ablaufenden Reaktion angepaßt ist. Damit wird eine homogene Reaktion im Volumen des Reaktors ermöglicht.

Findet z.B. eine exotherme Umsetzung des Mediums statt, z.B. eine katalytische Oxidation von Restwasserstoff in Brennstoffzellenabgas, wird im Eingangsbereich und/oder im Ausgangsbereich des Reaktors eine unerwünschte hohe Temperaturspitze vermieden, im mittleren Bereich durch Beheizung Energie zugeführt und ein Absinken der Umsetzung des Brennstoffzellenabgases vermieden oder zumindest vermindert, die durch die kontinuierliche Abnahme des Restwasserstoffs im Abgas beim Durchlaufen des Reaktors entsteht.

Damit kann vermieden werden, dass im Eingangsbereich des Katalysatorträgers 5 eine Temperaturüberhöhung stattfindet und dieser dadurch Schaden erleidet oder die katalytische Umsetzung des Mediums gestört wird.

Mit einer derartigen Anordnung kann die Temperaturverteilung innerhalb der Katalysatoranordnung gezielt eingestellt werden.

Falls die Wärmeabfuhr aus dem Inneren der Filterkerze gering ist, kann dort der Katalysatorträger relativ niederohmig ausgeführt werden, da er dort durch den Wärmeeintrag der Umgebung ausreichend beheizt wird.

Selbstverständlich kann die Anordnung der elektrischen Isolierung 6 auch an anderer Stelle der bevorzugten Filterkerze vorgesehen sein oder auch mehrere, in Umfangsrichtung unterbrochene elektrische Isolierungen 6 aufweisen. Damit kann die Temperaturverteilung für den jeweiligen Einsatz des Reaktors entsprechend optimiert werden.

Eine günstige Möglichkeit für eine derartige Ausgestaltung besteht darin, einen streifenförmigen Katalysatorträger 5 zumindest bereichsweise mit einem oder mehreren Streifen von elektrischem Isoliermaterial 6 zu bedecken und nach Art einer Filterkerze aufzuwickeln.

Besonders vorteilhaft ist es, den elektrischen Widerstand des Katalysatorträgers 5 entlang der Strömungsrichtung S des Mediums veränderbar auszugestalten, indem der elektrisch leitfähige Katalysatorträger 5 selbst entlang seiner Längserstreckung in seinen elektrischen Eigenschaften beeinflusst wird. So kann der Katalysatorträger 5 dicker ausgeführt werden, was den elektrischen Widerstand verringert und dergleichen.

Vorteilhaft ist der Katalysatorträger 5 aus einem metallischen Gewebe oder einem metallischen Netz oder einem Lochblech oder einem schwammartigen metallischen Material gebildet.

Ein besonders günstiges Material für die Isolierlagen 6 ist ein sogenanntes keramische Papier, welches die notwendige Flexibilität hat, um etwa in einer Filterkerze verwendet zu werden. Gleichzeitig ist die elektrische Isolierfähigkeit auch im eingebauten Zustand zwischen Katalysatorträgerlagen 6 sehr gut. Günstig ist es, die elektrische Isolierung ebenfalls mit Katalysatormaterial zu versehen, so dass die katalytische Aktivität der Anordnung erhöht ist. Durch Anpassung des elektrischen Widerstands des Katalysatorträgers 5, der Isolierlagenanordnung und/oder der chemischen Aktivität kann jeweils ein Reaktor für unterschiedliche Einsatzzwecke angepaßt werden.

Bei ausreichender mechanischer Stabilität des Katalysatorträgers 5, so dass die einzelnen Wickellagen sich nicht berühren, können die einzelnen elektrischen Lagen jedoch auch durch ihren geometrischen Abstand elektrisch isoliert, bevorzugt durch Luft, getrennt sein.

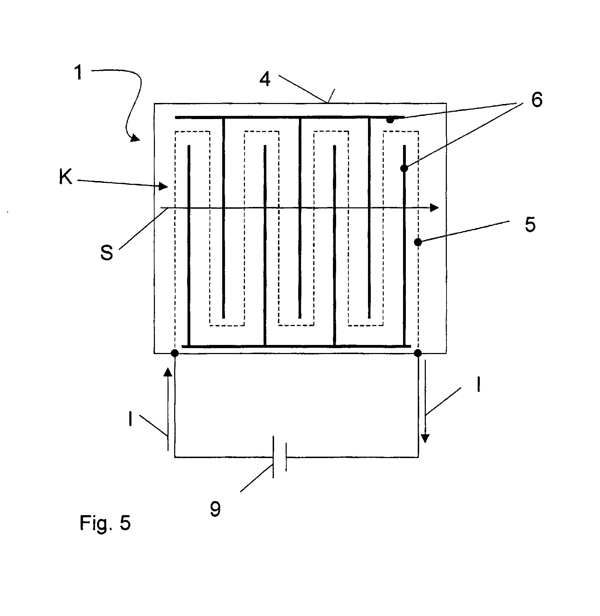

In Fig. 4 ist eine weitere Ausgestaltung eines bevorzugten Reaktors 1 dargestellt. Der Katalysatorträger 5 ist in Art einer Plattenanordnung bzw. einer mäanderartigen Anordnung angeordnet. Die einzelnen Platten des Katalysatorträgers sind durch Platten eines elektrischen Isolators 6 getrennt. Das umzusetzende Medium strömt innerhalb des Gehäuses 4 durch die Platten des Katalysatorträgers 5. Der Katalysatorträger 5 wird zur Beheizung von einem elektrischen Strom I durchflossen. Falls der Katalysatorträger 5 abweichend von der Darstellung in der Figur nicht durchgehend ist, sondern separate, einzelne Platten des Katalysatorträgers 5 getrennt voneinander angeordnet sind, kann der elektrische Kontakt z.B. über leitfähige Brücken zwischen den Platten hergestellt oder die Platten parallel bestromt werden.

Die Katalysatoreinheit K kann auch aus einem elektrisch leitfähigen Monolithen hergestellt werden, welcher geeignet bestromt wird. Auch hier ist es möglich, durch eine Aneinanderreihung von Katalysatormaterialbereichen mit unterschiedlichen elektrischen Eigenschaften die ohmschen Verluste entlang der Strömungsrichtung des Mediums durch den Katalysator bzw. der Lauflänge des Reaktors 1 lokal differenziert einzustellen, so dass eine Temperaturverteilung im Reaktor gezielt eingestellt werden kann.

Ein erfindungsgemäßer Reaktor 1 ermöglicht es, die Aktivierungsenergie, welche zum Start einer chemischen Umsetzung eines Mediums am Katalysator, etwa eines Brennstoffs oder eines Schadgases, auf elektrischem Weg direkt in den Katalysator einzubringen. Die in den Katalysator eingebrachte Wärme ermöglicht ein sofortiges Anspringen und Umsetzen des Mediums. Damit ist eine Optimierung des Umsatzes des Mediums möglich. Dies ist besonders günstig, wenn eine möglichst vollständige Umsetzung des Mediums im Reaktor erwünscht ist. Dies ist bei Reaktionen in Brennstoffzellensystemen, z.B. bei der Wasserstofferzeugung in einem Gaserzeugungssystem oder bei der Behandlung von Brennstoffzellenabgas häufig der Fall.

Vorzugsweise ist der Reaktor 1 in einem Brennstoffzellensystem angeordnet, wobei das umzusetzende Medium beispielsweise ein Gemisch aus Luft, Wasserstoff, Methanol und/oder anderen Alkoholen und/oder anderen Ethern und/oder Kohlenmonoxid ist.

Mit dem erfindungsgemäßen Reaktor lassen sich besonders unerwünschte Emissionen gerade in der Startphase unter Kaltstartbedingungen vermeiden oder zumindest reduzieren.

## Patentansprüche

1. Reaktor (1) zur Umsetzung eines Mediums, wobei abwechselnd Lagen eines Katalysatorträgers (5) und eines Isoliermaterials (6) aufeinanderfolgend angeordnet sind, wobei der Reaktor (1) elektrisch beheizt ist,
**dadurch gekennzeichnet,**
**dass** mehrere Lagen des Katalysatorträgers (5) und des Isoliermaterials (6) senkrecht zur Hauptströmungsrichtung (S) des Mediums angeordnet sind, das Medium im wesentlichen senkrecht durch die Lagen des Katalysatorträgers (5) und des Isoliermaterials (6) strömt und der Katalysatorträger (5) Bestandteil eines elektrischen Stromkreises ist.

2. Reaktor nach Anspruch 1,
**dadurch gekennzeichnet,**
**dass** ein erster elektrischer Kontakt (7) an einer ersten Kontaktstelle des Katalysatorträgers (5) und ein zweiter elektrischer Kontakt (8) an einer zweiten Kontaktstelle des Katalysatorträgers (5) so angeordnet ist, daß der elektrische Stromfluß (I) im wesentlichen senkrecht zur Strömungsrichtung (S) des Mediums durch den Katalysatorträger (5) erfolgt.

3. Reaktor nach Anspruch 1,
**dadurch gekennzeichnet,**
**daß** in Strömungsrichtung (S) des Mediums mehrere Lagen des Katalysatorträgers (5) angeordnet sind, wobei zwischen zwei oder mehr Lagen des Katalysatorträgers (5) zumindest bereichsweise eine oder mehrere Lagen des elektrischen Isoliermaterial (6) angeordnet ist oder sind.

4. Reaktor nach Anspruch 1,
**dadurch gekennzeichnet,**
**daß** der Katalysatorträger (5) als Streifen ausgebildet ist, wobei der Katalysatorträger (5) zumindest bereichsweise mit einem oder mehreren Streifen von elektrischem Isoliermaterial (6) bedeckt ist.

5. Reaktor nach Anspruch 3,
**dadurch gekennzeichnet,**
**daß** der Katalysatorträger (5) nach Art einer Filterkerze um ein erstes Rohrstück (2) gewunden ist und das erste Rohrstück (2) und der Katalysatorträger (5) von einem zweiten, einseitig geschlossenen Rohrstück (4, 3) zumindest bereichsweise umschlossen sind, wobei das erste und das zweite Rohrstück (2, 3) jeweils ein Bestandteil einer Medienleitung bilden.

6. Reaktor nach Anspruch 5,
**dadurch gekennzeichnet,**
**daß** das erste Rohrstück (2) elektrisch mit dem ersten elektrischen Kontakt (7) verbunden ist und im zweiten Rohrstück (4) eine elektrische Durchführung (10) zur elektrischen Ankontaktierung des zweiten elektrischen Kontakts (8) des Katalysatorträgers (5) vorgesehen ist.

7. Reaktor nach Anspruch 5,
**dadurch gekennzeichnet,**
**daß** entlang der Längserstreckung des Katalysatorträgers (5) Bereiche mit unterschiedlichem Querschnitt und/oder unterschiedlichem elektrischen Widerstand angeordnet sind.

8. Reaktor nach Anspruch 2,
**dadurch gekennzeichnet,**
**daß** das elektrische Isoliermaterial (6) zumindest bereichsweise Katalysatormaterial aufweist.

9. Reaktor nach Anspruch 1,
**dadurch gekennzeichnet,**
**daß** der Katalysatorträger (5) aus einem metallischen Gewebe und/oder einem metallischen Netz und/oder einem Lochblech und/oder einem schwammartigen metallischen Material gebildet ist.
